# EUROPÄISCHE PATENTSCHRIFT

(11) **EP 2 925 520 B1**
(45) Veröffentlichungstag und Bekanntmachung des Hinweises auf die Patenterteilung: **27.07.2016**
(21) Anmeldenummer: 13799015.6
(22) Anmeldetag: 28.11.2013
(51) Int. Cl.: B32B 5/02, B32B 5/18, E04C 2/20, E04D 12/00, B32B 5/24, B32B 7/02, B32B 27/06, E04B 1/62, B32B 27/40

(54) **MEHRLAGIGE GEBÄUDEMEMBRAN MIT SCHAUMKERN**
MULTILAYER BUILDING MEMBRANE WITH FOAM CORE
MEMBRANE MULTICOUCHE À ÂME EN MOUSSE POUR BÂTIMENTS

(30) Priorität: 29.11.2012 DE 102012111593
(43) Veröffentlichungstag der Anmeldung: 07.10.2015
(73) Patentinhaber: Hogg, Hermann, 79361 Sasbach (DE)
(72) Erfinder: KRONENBERG, Bernd, 41844 Wegberg (DE)
(74) Vertreter: Habbel, Ludwig
(86) Internationale Anmeldenummer: PCT/EP2013/075024
(87) Internationale Veröffentlichungsnummer: WO 2014/083137

(56) Entgegenhaltungen:
- US-A1- 2011 308 181

## Beschreibung

Die Erfindung betrifft eine mehrlagige Gebäudemembran nach dem Oberbegriff des Anspruchs 1.

Aus der Praxis sind gattungsgemäße, mehrlagige Gebäudemembranen als Dachbahnen oder Fassadenfolien bekannt, bei denen als Membrankern eine Vlieslage vorgesehen ist, beispielsweise aus Glasfasern, die zwischen zwei äußeren Kunststofffolien angeordnet ist, welche jeweils als Folienlage der mehrlagigen Gebäudemembran bezeichnet werden. Die Vlieslage ist mit den Folienlagen fest verbunden, beispielsweise laminiert oder geklebt. Sie wird als Verstärkungslage bezeichnet, da sie den Kunststofffolien eine geringfügig höhere Zugfestigkeit vermittelt und auch die Dicke, also die Materialstärke, der Gebäudemembran erheblich beeinflussen kann, nämlich wenn sie mehr als 50% der Materialstärke ausmacht.

Weiterhin sind einlagige Gebäudemembranen als Fassadenfolien bekannt, die ausschließlich aus einer Lage eines gummielastischen oder weichmachermodifizierten thermoplastischen Werkstoffs bestehen, wobei diese Ersteren in der Praxis als "Gummifolie" bezeichnete Lage mit Poren versehen ist, beispielsweise mit etwa 25 bis etwa 60 Poren pro Quadratzentimeter. Diese Poren können durch eine Nadelung der Gummifolie erzeugt sein. Derartige Gummifolien weisen, da sie dampfdiffusionsoffen ausgestaltet sein sollen, einen entsprechenden s_{d}-Wert von etwa 3 m auf. Als s_{d}-Wert ist dabei die wasserdampfdiffusionsäquivalente Luftschichtdicke bezeichnet, also ein in der Bauphysik gebräuchliches Maß für den Widerstand, den eine Bauteilschicht der Wasserdampfdiffusion entgegensetzt. Der s_{d}-Wert beschreibt den Diffusionswiderstand anschaulich, indem er die Dicke angibt, welche eine ruhende Luftschicht haben muss, damit sie im stationären Zustand und unter denselben Randbedingungen von demselben Diffusionsstrom durchflossen wird wie die betrachtete Bauteilschicht. Kleinere s_{d}-Werte stehen also für eine höhere Dampfdiffusionsoffenheit und sind insofern vorteilhaft.

Die genadelten Gummifolien weisen zudem hinsichtlich der Wasserdichtigkeit einen Wert von etwa 200 mm Wassersäule auf, gemessen nach DIN EN 1928, Verfahren B bei einem Prüfklima: DIN 50014-23/50-2. Für die Bemessung der Wasserdichtigkeit sind möglichst hohe Werte vorteilhaft.

Im Unterschied zu den erwähnten Gummifolien weisen die eingangs genannten Fassadenfolien hinsichtlich der Dampfdiffusionsoffenheit s_{d}-Werte von einem Meter oder weniger auf, und hinsichtlich der Wasserdichtigkeit Werte von 10 m Wassersäule oder mehr.

Fassadenfolien unterscheiden sich grundsätzlich von Folien, die im Hochbau beispielsweise im Bereich des Dachausbaus eingesetzt werden: Bei Bedachungen sind die Folien oberhalb einer Wärmedämmschicht, beispielsweise Mineralwolle, vorgesehen. Üblicherweise wird anschließend, außen auf den Folien, die Dachlattung angebracht, auf welche dann die eigentlichen Deckelemente des Daches gehalten werden, beispielsweise Dachsteine aus Beton oder Dachziegel aus Ton. Die Deckelemente des Daches stellen die wasserführende Ebene des Dachs dar, so dass die Folie parallel zu der wasserführenden Ebene des Dachs verläuft. Im Unterschied dazu ist in einer Gebäudefassade die Folie selbst die wasserführende Ebene.

Der Erfindung liegt die Aufgabe zugrunde, eine Gebäudemembran dahingehend zu verbessern, dass diese hervorragende Werte für die Dampfdiffusionsoffenheit einerseits und für die Wasserdichtigkeit andererseits aufweist und dass die Gebäudemembran hervorragende mechanische Widerstandswerte gegen die auf eine Fassadenfolie einwirkenden Belastungen aufweist.

Diese Aufgabe wird durch eine mehrlagige Gebäudemembran mit den Merkmalen des Anspruchs 1 gelöst. Die vorschlagsgemäße Fassadenfolie kann vorteilhaft in Form einer Bahn, oder eines vorkonfektionierten Fassadendichtstreifens nach Anspruch 19, oder als Dachbahn nach Anspruch 20 vertrieben werden. Vorteilhafte Ausgestaltungen sind in den Unteransprüchen beschrieben.

Die Erfindung schlägt mit anderen Worten vor, die Gebäudemembran dreilagig auszugestalten. Die Dampfdiffusionsoffenheit wird durch die Schaumlage überraschenderweise nicht nennenswert beeinträchtigt wird, unabhängig davon, ob es sich um einen offenporigen oder um einen geschlossenporigen Schaum handelt. Die Materialeigenschaften des thermoelastischen Kunststoffs lassen eine Dampfdiffusion durch die Zellwände des Schaums zu, wobei die Materialstärke dieser Zellwände erheblich geringer ist als die Materialstärke der Schaumlage insgesamt, so dass die gewünschte Dampfdiffusionsoffenheit der gesamten Gebäudemembran nicht durch die Schaumlage, sondern vielmehr durch die Folienstruktur der äußeren Folienlage bestimmt wird. Bei geeigneter Auswahl aus handelsüblichen Folien kann für die Gebäudemembran eine Dampfdiffusionsoffenheit erzielt werden, welche einen s_{d}-Wert von höchstens 20 Meter aufweist, beispielsweise einen Wert zwischen 0,02 m und 20 m. In praktischen Versuchen konnten s_{d}-Werte von weniger als 1 Meter erzielt werden. Die Wasserdichtigkeit kann gegenüber handelsüblichen Fassadenfolien dabei erheblich verbessert werden, so dass hinsichtlich der Wasserdichtigkeit die vorschlagsgemäße Gebäudemembran Werte von wenigstens 8 m aufweist und in praktischen Versuchen sogar Werte von 20 m Wassersäule erzielt werden konnten. Wasserdichtigkeitswerte von noch höheren Wassersäulen lassen sich technisch realisieren, bedingen üblicherweise jedoch einen erhöhten Materialverbrauch, was aufgrund des dementsprechend höheren Gewichts der Gebäudemembran in technischer Hinsicht sowie aufgrund der höheren Materialkosten in wirtschaftlicher Hinsicht nachteilig sein kann.

Die gute mechanische Belastbarkeit beruht aus der vorschlagsgemäßen Kombination einer unidirektional elastisch verformbaren Schaumlage und der dehnbaren Folienlage. Durch die Schaumlage wird die elastische Verformbarkeit der Gebäudemembran mit dem entsprechenden Rückstellvermögen sichergestellt. Die elastische Dehnbarkeit des Schaums ist nicht nur in einer einzigen bestimmten Richtung gegeben, also monodirektional, sondern in praktisch allen Richtungen, nämlich sowohl in Längs-, Quer- und Diagonalrichtung des Schaums gegeben, also unidirektional. Dadurch kann die gesamte Gebäudemembran gedehnt werden, ohne dass es zu einer Delamination kommt, wie sie bei Verwendung einer nicht dehnbaren oder nur monodirektional dehnbaren Schaumlage auftreten kann. Nach der Dehnung kann die gesamte Gebäudemembran aufgrund des elastischen Dehnungsverhaltens sämtlicher drei Lagen ihre ursprüngliche Form wieder einnehmen und somit auch ihre ursprünglichen Eigenschaften aufweisen. Durch die Dehnbarkeit kann die Gebäudemembran z. B. über einen Rohrstutzen gezogen werden, nachdem eine kleine Öffnung in die Gebäudemembran geschnitten wurde. Sie legt sich anschließend dicht an den Rohrstutzen an, wenn die Öffnung kleiner bemessen ist als der Querschnitt des Rohrstutzens. Im Ergebnis weist die vorschlagsgemäße Gebäudemembran Dichtigkeits- und Elastizitätseigenschaften auf wie eine so genannte Gummi- oder EPDM-Folie, allerdings bei weit höherer Dampfdiffusionsoffenheit, geringerem Flächengewicht und geringeren Herstellungskosten.

Die Ausgestaltung des Membrankerns mit einer Schaumlage verleiht der Gebäudemembran gute thermische und akustische Isolationseigenschaften. Die Materialstärke des Membrankerns kann beispielsweise 0,6 mm betragen, bis hin zu mehr als 10 mm bei einem entsprechend stabilen Schaum. Für viele Anwendungsfälle wird eine Materialstärke des Membrankerns zwischen 0,3 mm und 4 mm geeignet sein, und eine Materialstärke der jeweiligen Folienlage zwischen 0,02 mm und 1,3 mm geeignet sein, wobei die Materialstärken der gesamten Gebäudemembran etwa zwischen 2 mm und 6 mm liegen. Für die Verwendung als Fassadenfolie kann eine möglichst leichte Ausgestaltung der Gebäudemembran vorteilhaft sein, um die Eigengewichtsbelastung der Gebäudemembran gering zu halten. Bei einer Verwendung der Gebäudemembran als Dachbahn hingegen können größere Materialstärken vorteilhaft sein, um mittels einer größeren Materialstärke des Membrankerns eine möglichst hohe thermische und akustische Isolationswirkung z. B. gegen prasselnde Niederschläge zu erzielen.

Eine hohe mechanische Belastbarkeit der Gebäudemembran wird durch einen innigen Verbund der Schaumlage mit den beiden Folienlagen sichergestellt, der einer Delamination entgegenwirkt. Der innige Verbund wird dadurch sichergestellt, dass der Schaum aus einem thermoplastischen Elastomer besteht, und dass die Folienlage ebenfalls ein elastisch verformbares Material enthält und mittels Extrusionstechnik mit dem Schaum verbunden ist. Dabei wird das die Folienlage bildende Material unmittelbar aus einer Breitschlitzdüse im Extrusionsverfahren mit dem zuvor geschaffenen Schaum verbunden, so dass neben einer regelrechten mechanischen Verzahnung partielle homogene Verschmelzungen zwischen der noch schmelzwarmen Folienlage und dem Schaum stattfinden. Durch diesen Verbund kann zudem Klebstoff bzw. ein Haftvermittler eingespart werden, so dass die Gebäudemembran sehr wirtschaftlich herstellbar ist und ein geringes Flächengewicht aufweist, was ihre Handhabung vereinfacht, z. B. wenn die Gebäudemembran als Fassadenfolie in einem höheren Stockwerk eines Bauwerks verarbeitet werden soll.

Dabei ist vorschlagsgemäß vorgesehen, dass die Folienlage ebenso wie die Schaumlage unidirektional elastisch dehnbar sind, so dass die Gebäudemembran eine Dehnfestigkeit von wenigstens 40 % sowohl in Längsrichtung als auch in Querrichtung aufweist und eine Reißfestigkeit von wenigstens 120 N bei Belastung eines 50 mm breiten Streifens. Die vorschlagsgemäße Gebäudemembran reißt also erst, wenn sie um mehr als 40 % ihrer ursprünglichen Ausdehnung gedehnt wird, nämlich auf das 1,4-fache ihrer ursprünglichen Länge, wobei in praktischen Versuchen für die Dehnfestigkeit sogar Werte von mehr als 65 % bei Belastung in Längsrichtung der Gebäudemembran und von mehr als 85 % bei Belastung in Querrichtung der Gebäudemembran ermittelt wurden. Insbesondere kann die Dehnfestigkeit in beiden genannten Richtungen zwischen 40% und 1.000% liegen, wobei eine Dehnfestigkeit von 1.000% technisch herstellbar ist, jedoch im Rahmen des vorliegenden Vorschlags als ein Grenzwert angegeben ist, da ein zu großes Maß an Dehnfestigkeit voraussichtlich eine Gebäudemembran ergeben wird, welche eine nachteilig geringe Eigenstabilität aufweist und sich beispielsweise bereits aufgrund ihres Eigengewichts um ein unerwünscht großes Maß dehnen wird.

Dabei ist vorschlagsgemäß weiterhin vorgesehen, dass die die Gebäudemembran eine Reißfestigkeit von wenigstens 120 N bei Belastung eines 50 mm breiten Streifens. Im Unterschied zu der theoretischen Definition einer Reißfestigkeit, die eine Kraft pro Querschnittsfläche angibt, z. B. in n/mm², wird für die praxisrelevante Definition im Rahmen des vorliegenden Vorschlags die Zugkraft angegeben, bei welcher ein 50 mm breiter Streifen aus dem Material der Gebäudemembran reißt. Unterschiedlich dicken Materialien, bei denen dementsprechend ein 50 mm breiter Teststreifen unterschiedlich große Querschnittsflächen aufweist, wird daher im Rahmen des vorliegenden Vorschlags dieselbe Reißfestigkeit zugeschrieben, wenn sie bei Aufbringen derselben Zugkraft reißen.

Die Bezeichnungen der Längs- und Querrichtung bemessen sich dabei nach dem Produktionsverfahren, so dass eine auf eine Trommel aufgewickelte Gebäudemembran in Umfangsrichtung der Trommel ihre Längsrichtung aufweist und in Achsrichtung der Trommel ihre Querrichtung aufweist.

Durch diese Dehnfähigkeit der Gebäudemembran, verbunden mit der hohen Reißfestigkeit von 120 N auf einem praxisüblichen 50 mm breiten Teststreifen, ist sichergestellt, dass beispielsweise bei auf eine Fassade einwirkenden Windlasten die bei einer hinterlüfteten Fassade auf die Fassadenfolie einwirkenden Druck- bzw. Sogwirkungen nicht zu einem Versagen der Fassadenfolie, insbesondere nicht zum Einreißen der als Fassadenfolie dienenden Gebäudemembran führen. Eine hohe Reißfestigkeit ist zudem während der Montage der Gebäudemembran vorteilhaft: wenn sie z. B. im Dachbereich eines Gebäudes angebracht wird, stellt ihre Reißfestigkeit einen Unfallschutz dar, z. B. gegen herabfallende Gegenstände, die bei einer weniger reißfesten Gebäudemembran beispielsweise Personen gefährden oder Gegenstände beschädigen könnten, die sich darunter aufhalten. Und für das Montagepersonal selbst stellt eine hohe Reißfestigkeit ebenfalls einen Unfallschutz dar, z. B. wenn eine Person sich auf Dachsparren oder Dachlatten einer Dachkonstruktion bewegt und abrutscht, so dass in diesem Fall eine reißfeste Gebäudemembran einen Durchtritts- oder Durchfallschutz bieten kann. Selbst wenn die Gebäudemembran dann doch nachgibt und reißt, kann die damit verbundene zeitliche Verzögerung der betreffenden Person die Möglichkeit geben, sich noch rechtzeitig am Dachstuhl festzuhalten, so dass gegebenenfalls ein schwererer Unfall verhindert werden kann.

Die der Folienlage gegenüberliegende zweite Außenlage kann durch ein Vlies gebildet sein, so dass die Gebäudemembran besonders wirtschaftlich herstellbar ist. Das Vlies kann durch seine Ausgestaltung, z. B. durch eine thermische Verfestigung oder durch Nadelung, die Dehnbarkeit der Folienlage und des Membrankern zu begrenzen helfen, um eine unerwünschte Überdehnung z. B. der Folienlage zu verhindern, die ansonsten durch an einer Fassade auftretende Wind-Sogkräfte hervorgerufen werden könnte.

Vorteilhaft kann die Verwendung von zwei Folienlagen vorgesehen sein, welche die beiden Außenlagen der Gebäudemembran bilden. Wie weiter oben erwähnt, ist dies bei geeigneter Ausgestaltung der Folienlage nicht nachteilig, was die gewünschte Eigenschaft der Dampfdiffusionsoffenheit angeht. Zwei benachbarte Gebäudemembranen können bei dieser Ausgestaltung mit jeweils zwei äußeren Folienlagen miteinander verschweißt werden, statt lediglich verklebt zu werden, so dass eine über lange Zeit dichte Verbindung dieser beiden benachbarten Gebäudemembranen zuverlässig sichergestellt werden kann. Bei der Verwendung der Gebäudemembran als Dachbahn kann dies besonders vorteilhaft sein, insbesondere je flacher die Dachneigung gegenüber der Horizontalen gewählt ist. Nachfolgend wird wiederholt dieser Aufbau der Gebäudemembran mit zwei äußeren Folienlagen rein beispielhaft erwähnt, ohne dass der vorliegende Vorschlag ausschließlich auf eine derartige Ausgestaltung eingeschränkt ist. Vielmehr können Vorschläge, welche die Ausgestaltung der beiden äußeren Folienlagen betreffen, auch für eine Folienlage gelten, wenn diese die einzige äußere Folienlage ist.

Vorteilhaft kann vorgesehen sein, dass die beiden äußeren Folienlagen jeweils aus einer monolithischen Kunststofffolie gebildet sind. Als monolithisch ist dabei bezeichnet, dass die Folienlagen keine regelrechten Poren aufweisen, die gegebenenfalls mechanisch erzeugt werden, sondern dass sie vielmehr aus einem Material bestehen, dessen Molekülstruktur dickere und dünnere Bereiche aufweist, wobei die dünneren Bereiche des Molekülaufbaus die Permeabilität der Folie bewirken. Dabei ist es aus der Praxis bekannt, dass die Bezugsquellen, von denen das zur Folienherstellung verwendete Material bezogen wird, auch Angaben darüber machen, bei welcher Schichtdicke des hergestellten Produkts - also z. B. bei welcher Schichtdicke einer extrudierten Folienlage der Gebäudemembran - dieses Produkt welches Maß an Dampfdiffusionsdurchlässigkeit und Wasserdichtheit aufweist. Je nach verwendetem Material und den dazu angegebenen Eigenschaften kann daher die Schichtdicke so eingestellt werden, dass die gewünschten Eigenschaften der Gebäudemembran resultieren.

Vorteilhaft kann vorgesehen sein, dass der Schaum und / oder die Folienlagen jeweils aus einem thermoplastischen Urethan, also TPU, gebildet sind. TPU kann mittels der Schichtdicke so eingestellt werden, dass die Gebäudemembran die gewünschten Werte für Dampfdiffusionsdurchlässigkeit und Wasserdichtheit aufweist. Zudem weist eine aus TPU bestehende äußere Folienlage hervorragende Reibfestigkeitswerte auf: wenn die Gebäudemembran als Fassadenfolie dient und an der Baustelle über die Kante eines Gerüstes oder an einem vorstehenden Nagel- oder Schraubenkopf entlang gezogen wird, oder wenn ein Werkzeug an der Gebäudemembran entlang geführt wird, hat die Gebäudemembran eine hohe Widerstandskraft, bevor ihre Oberfläche beschädigt werden kann und die Eigenschaften der Gebäudemembran beeinträchtigt werden.

Insbesondere wenn sowohl der Schaum als auch die Folienlagen aus TPU gebildet sind, ergibt sich eine hervorragende Möglichkeit, eine innige Verbindung zwischen dem Membrankern und den beiden Folienlagen im Extrusionsbeschichtungsverfahren zu erreichen, ohne einen Kosten und Gewicht der Gebäudemembran nachteilig beeinflussenden Haftvermittler verwenden zu müssen.

Vorteilhaft kann die mittlere Schaumlage der dreilagigen Gebäudemembran mittels einer Vlieslage verstärkt sein. Oder, mit anderen Worten ausgedrückt: der Membrankern kann nicht nur aus der Schaumlage bestehen, also einlagig aufgebaut sein, sondern dreilagig, indem der Membrankern eine mittlere Vlieslage und zwei äußere Schaumlagen aufweist. Bei Anordnung nur eines Vlieses - statt Schaum - zwischen zwei an das Vlies anschließenden äußeren Folienlagen kann das Phänomen auftreten, dass die Enden der Vliesfasern in die Folienlage hineinragen bzw. hineinstechen und dadurch die Unversehrtheit der Folienlage gefährden, insbesondere wenn die Folienlage mechanischen Beanspruchungen ausgesetzt wird, z. B. wenn die Gebäudemembran gedehnt oder auf Druck beansprucht wird. Dieses Problem tritt umso stärker in Erscheinung, je dünner die jeweilige Folienlage ausgestaltet ist. Bei dem erwähnten, dreilagig aufgebauten Membrankern hingegen nehmen die beiderseits der Vlieslage vorgesehenen Schaumlagen diese Spitzen bzw. Enden der Vliesfasern auf, so dass diese nicht in Kontakt mit den äußeren Folienlagen kommen und daher sehr dünne äußere Folienlagen verwendet werden können, was wirtschaftlich als auch hinsichtlich des Gewichts und der Dampfdiffusionsoffenheit der Gebäudemembran vorteilhaft ist.

Die beiden Schaumlagen des dreilagig aufgebauten Membrankerns können unterschiedlich ausgestaltet sein, z. B. unterschiedliche Materialstärken aufweisen. Oder sie können unterschiedliche Raumgewichte aufweisen, um eine "härtere" und eine "weichere" Seite der Gebäudemembran zu schaffen. Oder sie können aus zwei unterschiedlichen Werkstoffen bestehen. Jedenfalls können durch die unterschiedlichen Schaumlagen die Eigenschaften der Gebäudemembran zu ihren zwei Seiten hin, also zu einer Vorder- und einer Rückseite bzw. zu einer Ober- und einer Unterseite, unterschiedlich eingestellt werden, in Anpassung an den vorgesehenen Verwendungszweck der Gebäudemembran, z. B. als Fassadenfolie oder als Dachbahn.

Das Vlies kann vorteilhaft ebenfalls aus einem aus einem thermoplastischen Elastomer bestehen, z. B. aus einem TPU. So wird eine innige Verbindung mit den angrenzenden Schaumlagen erleichtert, was die Festigkeit der Gebäudemembran positiv beeinflusst.

Durch eine vorteilhafte Ausgestaltung des Vlieses als so genanntes "Meltblown"-Produkt wird die elastische Verformbarkeit mit dem entsprechenden Rückstellvermögen sichergestellt.

Die Vlieslage kann vorteilhaft selbstverfestigend bzw. thermisch verfestigt sein. Auf diese Weise wird einer Delamination der Gebäudemembran entgegengewirkt, wenn beispielsweise Sogkräfte auf die Gebäudemembran einwirken, so dass in diesen Fällen die Vlieslage nicht als eine leicht aufzutrennende Trennschicht zwischen den beiden Schaumlagen wirkt.

Vorteilhaft kann vorgesehen sein, dass die Schaumlage bzw. der gesamte Membrankern ein geringes Flächengewicht aufweist, vorteilhaft ein Flächengewicht von mehr als 40 g/m² und höchstens 150 g/m², so dass eine leichtgewichtige Gebäudemembran geschaffen wird, die nicht bereits durch ihr Eigengewicht bei größeren Folienabmessungen zu unerwünschten mechanischen Belastungen der Gebäudemembran bzw. einer eventuellen Fügestelle oder Naht führt.

Vorteilhaft kann vorgesehen sein, dass der Membrankern hydrophob ausgestaltet ist, um auf diese Weise zu vermeiden, dass durch die Aufnahme von Feuchtigkeit in die eine bzw. zwei Schaumlagen sowie in das ggf. vorgesehene Vlies eine Isolierwirkung der Gebäudemembran beeinträchtigt wird. Zudem könnte bei Temperaturen unter 0°C die Gefahr bestehen, dass gefrierendes Wasser zur Zerstörung des Verbundes in der Gebäudemembran führen könnte.

Vorteilhaft kann vorgesehen sein, dass die eine Schaumlage bzw. die beiden Schaumlagen und / oder die Vlieslage des Membrankerns einen Quellstoff aufweist. Dadurch kann die Gebäudemembran selbstabdichtende Eigenschaften erhalten: Falls ein Nagel durch die Gebäudemembran geschlagen wird oder die Oberfläche der Gebäudemembran anderweitig verletzt wird, kann Feuchtigkeit in die Gebäudemembran eindringen. Der im Membrankern befindliche Quellstoff quillt dann auf und verhindert weiteren Feuchtigkeitseintritt, so dass im Ergebnis die Gebäudemembran trotz der Beschädigung dicht bleibt.

Als Quellstoff kommt beispielsweise ein als Superabsorber bezeichnetes Material in Frage.

Der Quellstoff kann direkt an die Fasern des Vlieses angelagert sein, oder als Hüllschicht Teil der Fasern des Vlieses sein. Er kann aber auch als separates Material in das Vlies und / oder in den Schaum eingebracht sein, z. B. eingestreut sein. Granulatförmiger Quellstoff kann beispielsweise in den Schaum eingestreut werden, nachdem der Schaum mit einer ersten Folienlage verbunden worden ist und bevor die Schaumlage mit der zweiten Folienlage verbunden wird.

Weiterhin kann vorgesehen sein, dass der Schaum bzw. das Vlies des Membrankerns brandhemmend ausgestaltet ist, so dass der vorschlagsgemäßen Gebäudemembran möglichst weite Einsatzbereiche ermöglicht werden. Bei der brandhemmenden Ausgestaltung des Membrankerns kann insbesondere vorteilhaft vorgesehen sein, dass das Vlies bzw. der Schaum selbstverlöschend ausgestaltet ist, so dass ein besonders effektiver Brandschutz gewährleistet werden kann. Der brandhemmende und ggf. selbstverlöschende Membrankern kann beispielsweise vorteilhaft ein Melaminharz oder andere handelsübliche Materialien enthalten, welche der Gebäudemembran die gewünschten brandhemmenden oder selbstverlöschende Eigenschaften vermitteln, so dass durch Einsatz handelsüblicher und dementsprechend preisgünstiger Rohstoffe die gewünschten Produkteigenschaften der Gebäudemembran ermöglicht werden. Dabei kann insbesondere vorgesehen sein, den Membrankern derart auszugestalten, dass die Gebäudemembran die gewünschten Produkteigenschaften erhält. Beispielsweise können in die Hohlräume des Schaumes bzw. des Vlieses die zusätzlichen Materialien eingebracht werden.

Vorteilhaft kann aus der vorschlagsgemäßen Gebäudemembran ein vorkonfektionierter Fassadendichtstreifen hergestellt werden. Derartige Fassadendichtstreifen werden beispielsweise im Übergangsbereich von der großflächigen Fassade zu Fassadeneinschnitten, wie Türen oder Fenstern verwendet, wo sie einen dichten Übergang von der übrigen Fassade zu der jeweiligen Laibung ermöglichen. Dementsprechend sind derartige Fassadendichtstreifen schmaler geschnitten als die übrige, üblicherweise als Rollenware konfektionierte Gebäudemembran, die z. B. als so genannte Fassadenfolie in den Handel gelangen kann. Beispielsweise können die Fassadendichtstreifen Breiten von etwa 20 cm aufweisen, während die an derselben Fassade verwendeten Fassadenfolien jeweils eine Breite von etwa 1 m bis 3 m aufweisen.

Vorteilhaft können die erwähnten Fassadendichtstreifen im Sinne einer möglichst einfachen Verarbeitung nicht nur hinsichtlich ihrer Abmessungen, also ihrer Breite, vorkonfektioniert sein, sondern bereits auch mitzusätzlichen Dichtelementen versehen sein. So kann beispielsweise vorteilhaft vorgesehen sein, dass der Fassadendichtstreifen mit einem zusätzlichen Dichtungsprofil versehen ist, welches beispielsweise aus einem Elastomerwerkstoff bestehen kann oder aus einem Schaumwerkstoff. Beispielsweise kann ein solcher Dichtungsprofilstreifen als sogenannter Keder ausgestaltet sein, der aus einem SK- oder Butyl-Material besteht und mit der den Fassadendichtstreifen bildenden Gebäudemembran verklebt oder verschweißt ist.

Je nach Ausgestaltung der Gebäudemembran kann also eine dampfdiffusionsoffene Folie geschaffen werden, die - abgesehen von ihrer Dehnbarkeit und Reißfestigkeit - im wesentlichen die Ansprüche an die Dampfdiffusionsoffenheit und an die Winddichtigkeit sowie Wasserdichtigkeit erfüllt, so dass für den Einsatz an Gebäudefassaden ein gegen Delamination gut gesichertes und zugfestes Endprodukt als Gebäudemembran geschaffen wird.

Es kann vorteilhaft vorgesehen sein, die mittlere Vlieslage des Membrankerns an ihren beiden Oberflächen zu flammen, um die Verbindung zur angrenzenden Schaumlage zu verbessern.

## Patentansprüche

1. Mehrlagige Gebäudemembran,
mit zwei Außenlagen,
von denen eine als Folienlage ausgestaltet ist, die
▪ unidirektional elastisch dehnbar ist,
▪ und ein elastisch verformbares, als TPU bezeichnetes thermoplastisches Urethan enthält,
wobei
▪ zwischen den beiden Außenlagen der Gebäudemembran ein so genannter Membrankern angeordnet und mit diesen beiden Außenlagen verbunden ist,
▪ die Gebäudemembran eine Dehnfestigkeit von wenigstens 40% in Längs- und Querrichtung aufweist
▪ sowie eine Reißfestigkeit, bezogen auf einen 50 mm breiten Membranstreifen, von wenigstens 120 N,
▪ hinsichtlich ihrer Dampfdurchlässigkeit einen s_{d}-Wert von höchstens 20 m,
▪ und hinsichtlich ihrer Wasserundurchlässigkeit einen Wert, der einer Wassersäule von wenigstens 8 m entspricht
**dadurch gekennzeichnet,**
**dass** der Membrankern eine Schaumlage aufweist, die aus einem geschäumten, thermoelastischen Material besteht, wobei an jede der beiden Außenlagen eine Schaumlage anschließt.

2. Gebäudemembran nach Anspruch 1,
**dadurch gekennzeichnet,**
**dass** die Schaumlage als Extrusionsbeschichtung mit der benachbarten Folienlage verbunden ist.

3. Gebäudemembran nach Anspruch 1 oder 2,
**dadurch gekennzeichnet,**
**dass** beide Außenlagen als Folienlage ausgestaltet sind.

4. Gebäudemembran nach einem der vorhergehenden Ansprüche,
**dadurch gekennzeichnet,**
**dass** der Membrankern aus einer einzigen Schaumlage gebildet ist, die an ihren beiden Oberflächen jeweils mit einer Außenlage verbunden ist.

5. Gebäudemembran nach einem der Ansprüche 1 bis 3, **dadurch gekennzeichnet,**
**dass** der Membrankern dreilagig aufgebaut ist und zwei Schaumlagen aufweist, zwischen denen eine Mittellage angeordnet ist.

6. Gebäudemembran nach Anspruch 5,
**dadurch gekennzeichnet,**
**dass** die Mittellage als Vlies ausgestaltet ist.

7. Gebäudemembran nach Anspruch 5 oder 6,
**dadurch gekennzeichnet,**
**dass** die beiden Schaumlagen des Membrankerns unterschiedliche Eigenschaften aufweisen.

8. Gebäudemembran nach Anspruch 7,
**dadurch gekennzeichnet,**
**dass** die beiden Schaumlagen unterschiedliche Materialstärken aufweisen.

9. Gebäudemembran nach Anspruch 7 oder 8,
**dadurch gekennzeichnet,**
**dass** die beiden Schaumlagen unterschiedliche Raumgewichte aufweisen.

10. Gebäudemembran nach einem der Ansprüche 6 bis 8,
**dadurch gekennzeichnet,**
**dass** die beiden Schaumlagen aus unterschiedlichen Materialien bestehen.

11. Gebäudemembran nach einem der vorhergehenden Ansprüche,
**dadurch gekennzeichnet,**
**dass** die Folienlage aus einer monolithischen Kunststofffolie gebildet ist.

12. Gebäudemembran nach einem der vorhergehenden Ansprüche,
**dadurch gekennzeichnet,**
**dass** die Schaumlage ein TPU aufweist.

13. Gebäudemembran nach Anspruch 12,
**dadurch gekennzeichnet,**
**dass** die Schaumlage aus einem TPU besteht.

14. Gebäudemembran nach einem der vorhergehenden Ansprüche,
**dadurch gekennzeichnet,**
**dass** die Folienlage aus einem TPU besteht.

15. Gebäudemembran nach einem der vorhergehenden Ansprüche,
**dadurch gekennzeichnet,**
**dass** die Schaumlage einen Quellstoff aufweist.

16. Gebäudemembran nach einem der vorhergehenden Ansprüche,
**dadurch gekennzeichnet,**
**dass** die Schaumlage hydrophob ist.

17. Gebäudemembran nach einem der vorhergehenden Ansprüche,
**dadurch gekennzeichnet,**
**dass** die Schaumlage brandhemmend ist.

18. Gebäudemembran nach einem der vorhergehenden Ansprüche,
**dadurch gekennzeichnet,**
**dass** die Schaumlage selbstverlöschend ist.

19. Fassadendichtstreifen, der als Streifen aus einer Gebäudemembran nach einem der vorhergehenden Ansprüche ausgestaltet ist.

20. Dachbahn, die als Streifen aus einer Gebäudemembran nach einem der Ansprüche 1 bis 18 ausgestaltet ist

## Claims

1. Multiple-layer building foil
having two outer layers,
of which one is formed as a foil layer which is
elastically stretchable in one direction,
and contains an elastically ductile thermoplastic urethane designated as TPU where a so-called foil core is arranged between the two outer layers of the building foil to which the foil core is joined
the building foil has a tensile strength of at least 40% in the longitudinal and transverse direction
and an ultimate tensile strength of at least 120 N with reference to a strip of foil 50 mm in width
a maximum S_{d} value of 20 m with regard to vapour permeability and a value corresponding to a water-column of at least 8m with regard to water impermeability,
**characterised in that**
the foil core has a foam layer consisting of a thermoelastic foam material, where a foam layer adjoins each of the two outer layers.

2. Building foil in accordance with claim 1,
**characterised in that**
the foam layer is joined to the adjacent foil layer as an extruded coating.

3. Building foil in accordance with claim 1 or claim 2,
**characterised in that**
the two outer layers are formed as foil layers.

4. Building foil in accordance with any of the preceding claims,
**characterised in that**
the foil core is formed of a single foam layer which is joined to an outer layer at each of its two surfaces.

5. Building foil in accordance with any of the claims 1 to 3,
**characterised in that**
the foil core consists of three layers and has two foam layers between which a middle layer is arranged.

6. Building foil in accordance with claim 5,
**characterised in that**
the middle layer is formed as a fleece.

7. Building foil in accordance with claim 5 or claim 6,
**characterised in that**
the two foam layers of the foil core have different characteristics.

8. Building foil in accordance with claim 7,
**characterised in that**
the two foam layers differ in thickness.

9. Building foil in accordance with claim 7 or claim 8,
**characterised in that**
the two foam layers differ in volume weight.

10. Building foil in accordance with any of the claims 6 to 8,
**characterised in that**
the two foam layers consist of different materials.

11. Building foil in accordance with any of the preceding claims,
**characterised in that**
the foil layer consists of a monolithic plastic foil.

12. Building foil in accordance with any of the preceding claims, **characterised in that** the foam layer has a TPU.

13. Building foil in accordance with claim 12,
**characterised in that**
the foam layer consists of a TPU.

14. Building foil in accordance with any of the preceding claims,
**characterised in that**
the foil layer consists of a TPU.

15. Building foil in accordance with any of the preceding claims, **characterised in that** the foam layer has a bulking material.

16. Building foil in accordance with any of the preceding claims,
**characterised in that**
the foam layer is hydrophobic.

17. Building foil in accordance with any of the preceding claims,
**characterised in that**
the foam layer is flame retardant.

18. Building foil in accordance with any of the preceding claims,
**characterised in that**
the foam layer is self-extinguishing.

19. Building sealing strip which is formed as a strip of a building foil in accordance with any of the preceding claims.

20. Roof sheet which is formed of a strip of the building foil in accordance with any of the claims 1 to 18.

## Revendications

1. Membrane multicouches pour bâtiment,
comprenant deux couches externes
dont une est configurée en forme de film qui est
extensible élastiquement dans une seule direction
et qui contient un uréthane thermoplastique déformable élastiquement appelé TPU, sachant que
entre les deux couches externes de la membrane du bâtiment est agencé un élément appelé noyau de membrane et relié avec ces deux couches externes la membrane de bâtiment présente une résistance à l'élongation d'au moins 40 % dans le sens longitudinal et le sens transversal
ainsi qu'une résistance au déchirement d'au moins 120 N référée à un ruban de membrane large de 50 mm
une valeur S_{d} d'au maximum 20 m quant à sa perméabilité à la vapeur et relativement à son imperméabilité à l'eau une valeur correspondant à une colonne d'eau d'au moins 8 m,
**caractérisée en ce que**
le noyau de membrane présente une couche de mousse composée d'un matériau thermoélastique moussé, sachant qu'à chacune des deux couches externes se raccorde une couche de mousse.

2. Membrane pour bâtiment selon la revendication 1,
**caractérisée en ce que**
la couche de mousse est, en tant que revêtement extrudé, reliée à la couche de film voisine.

3. Membrane pour bâtiment selon la revendication 1 ou 2, **caractérisée en ce que** les deux couches externes sont configurées en couche de film.

4. Membrane pour bâtiment selon l'une des revendications précédentes, **caractérisée en ce que** le noyau de membrane est formé d'une seule couche de mousse reliée au niveau de ses deux surfaces respectivement avec une couche externe.

5. Membrane pour bâtiment selon l'une des revendications 1 à 3, **caractérisée en ce que** le noyau de membrane se compose de trois couches et présente deux couches de mousse entre lesquelles est agencée une couche médiane.

6. Membrane pour bâtiment selon la revendication 5, **caractérisée en ce que** la couche médiane est configurée en non-tissé.

7. Membrane pour bâtiment selon la revendication 5 ou 6, **caractérisée en ce que** les deux couches de mousse que comporte le noyau de membrane présentent des propriétés différentes.

8. Membrane pour bâtiment selon la revendication 7, **caractérisée en ce que** les deux couches de matériau mousse présentent des épaisseurs différentes.

9. Membrane pour bâtiment selon la revendication 7 ou 8, **caractérisée en ce que** les deux couches de mousse présentent des poids spécifiques différents.

10. Membrane pour bâtiment selon l'une des revendications 6 à 8, **caractérisée en ce que** les deux couches de mousse se composent de matériaux différents.

11. Membrane pour bâtiment selon l'une des revendications précédentes, **caractérisé en ce que** la couche de film est formée d'un film plastique monolithique.

12. Membrane pour bâtiment selon l'une des revendications précédentes, **caractérisée en ce que** la couche de matériau mousse présente un TPU.

13. Membrane pour bâtiment selon la revendication 12, **caractérisé en ce que** la couche de mousse est un TPU.

14. Membrane pour bâtiment selon l'une des revendications précédentes, **caractérisée en ce que** la couche de film est formée d'un TPU.

15. Membrane pour bâtiment selon l'une des revendications précédentes, **caractérisée en ce que** la couche de mousse présente un agent gonflant.

16. Membrane pour bâtiment selon l'une des revendications précédentes, **caractérisée en ce que** la couche de mousse est hydrophobe.

17. Membrane pour bâtiment selon l'une des revendications précédentes, **caractérisée en ce que** la couche de mousse est inhibitrice d'incendie.

18. Membrane pour bâtiment selon l'une des revendications précédentes, **caractérisée en ce que** la couche de mousse est auto-extinguible.

19. Bande d'étanchéité pour façades, configurée sous forme de bande provenant d'une membrane pour bâtiment selon l'une des revendications précédentes.

20. Feuille d'étanchéité pour toiture, configurée en forme de bande à partir d'une membrane pour bâtiment selon l'une des revendications 1 à 18.
